Europäisches Patentamt

European Patent Office

Office européen des brevets

(11) Publication number: **0 079 758**
A1

(12) # EUROPEAN PATENT APPLICATION

(21) Application number: 82305997.7

(22) Date of filing: 11.11.82

(51) Int. Cl.³: **A 01 G 9/12**
    A 01 G 17/04

(30) Priority: 12.11.81 US 320139

(43) Date of publication of application:
    25.05.83 Bulletin 83/21

(84) Designated Contracting States:
    AT BE CH DE FR GB IT LI LU NL SE

(71) Applicant: Madonia, Audrey Noreen
    1390 Beaufort Drive
    Burlington Ontario(CA)

(72) Inventor: Madonia, Ciro
    1390 Beaufort Drive
    Burlington Ontario(CA)

(74) Representative: Ranson, Arthur Terence et al,
    W.P. Thompson & Co. Coopers Building Church Street
    Liverpool L1 3AB(GB)

(54) Support stake for plants and method of fabricating the stake.

(57) An extruded support stake (10) for plants is provided
having a plurality of wing portions (12), at least one
longitudinally extending surface (11) being inwardly curved
to connect said wing portions (12) for receiving in use a
portion of a plant (13) in braced relation therein. Preferably
the lobes have serrated edge portions (14) for locating and
retaining ties (17). The stake may be formed from an
extrudable metal, but is preferably made by extrusion of a
synthetic resinous plastics material.

Fig 1

Fig 2

Fig 3

Croydon Printing Company Ltd.

-1-

DESCRIPTION

"SUPPORT STAKE FOR PLANTS AND METHOD OF

FABRICATING THE STAKE"

This invention is directed to a support stake for plants and a method of manufacturing the same. More particularly it relates to an extruded stake made of metal or synthetic plastics material.

Many previous attempts have been made to provide practical stakes for use in supporting soft stemmed plants.

Widespread use is still made of wooden stakes for use with plants such as tomatoes, flowers and the like. However, wood is expensive, bulky and can break and inflicts splinters or slivers on the unwary user. Metal is practical to an extent but it is a high cost heavy item, subject to rust, and expensive to transport in bulk. However there may be situations in which metal stakes are desirable or even essential.

Other speciality stakes, such as that shown in U.S. Patent Specification No.4,176,494 have been proposed, but being of relatively complex arrangement they are unsuited for low cost extruded production, and may furthermore be over-complicated by stem clips and the like.

Canadian Patent Specification No.279,684 shows a metal stake of U-section having a complex adjustable securing ring for attachment of a plant to the stake; and U.S. Patent Specification No.3,875,699 shows a plastics post having a hollow section with extending flanges for use as a grape stake, being notched to receive wire clips.

According to the present invention there is therefore provided an extruded support stake for plants having a plurality of wing portions, at least one longitudinally extending surface being inwardly curved to connect said wing portions for receiving in use a portion of a plant in braced relation therein.

In its preferred form, the stake is a lightweight stake having a lobed cross section possessed of a high stiffness, at least some of the lobes having serrated edges to promote the non-slippage of ties by means of which portions of plants are tied to the stake, the provision of multiple lobes serving to facilitate the attachment of more than one plant if desired, and promoting packaging and transportation by semi-nesting together of multiples of stakes into bundles.

the above-mentioned wing portions may be constituted by a plurality of extending wing portions possessing a high stiffness modulus. In addition, the edges of the stake wing portions are preferably serrated, to facilitate the tying of ties in substantially non-slipping relation with the stake. The provision of a cap at one end of the stake facilitates driving of the stake into the ground, the other end of the stake being parted by way of an oblique cut, to simplify fabrication and point the stakes, two at a time, in point-to-point relation to facilitate utilization.

The stake may be formed from an extrudable metal, such as aluminium, but is preferably made from a synthetic plastics material.

The form of the stake indicated above provides the following characteristics;

1) Low weight-to-stiffness ratio.

2) Low cross-sectional area which facilitates driving the stake into the ground;

3) Cross-sectional form adapted to production by extrusion;

4) Tying serrations which are readily applied during the extrusion process and which also "break"

-3-

the sharp edge portions and facilitate handling.

5) Outwardly concave lobed surfaces tend to provide directionalized soil compaction to minimise loosening effect in the ground, with a diminished need for ground penetration.

6) Lobed surface provides stem localization, with indirect tie forces to minimise stem damage.

The stake of the present invention, particularly when extruded from a synthetic plastics material, provides a durable, clean, low-cost, washable stake which is readily stored and transported. Colour may be added, at the preference of the user, using a stable plastics material such as a bottle compound. Owing to the vulnerability of PVC to ultraviolet degradation, the use of reclaimed scrap is contemplated.

There is further provided a method of manufacturing a stake by the extrusion of a lobed section, including serrating the edges of the section. Thus, according to a further aspect of the present invention, there is provided a method of fabricating a support stake for plants including the steps of extruding a multi-lobed section, and forming serrated indentations into edge portions of said lobes subsequent to extrusion.

The method may involve the extrusion of a thermosetting plastics material to form the multi-lobed section, and the indentations may be formed by rolling, cutting or turning.

The invention will now be further described, merely by way of example, with reference to the accompanying drawings, wherein:

Figure 1 is a general view showing a portion of a stake in accordance with the present invention;

Figure 2 is a schematic plan section showing a plant stem in tied relation with the stake of Figure 1;

Figure 3 is a scrap view showing a serrated lobe edge of the stake of Figure 1;

Figures 4, 5 and 6 show horizontal cross-sections through alternative embodiments; and

Figure 7 shows a stake, according to the present invention, complete with end cap and diagonal point, in ground-inserted relation.

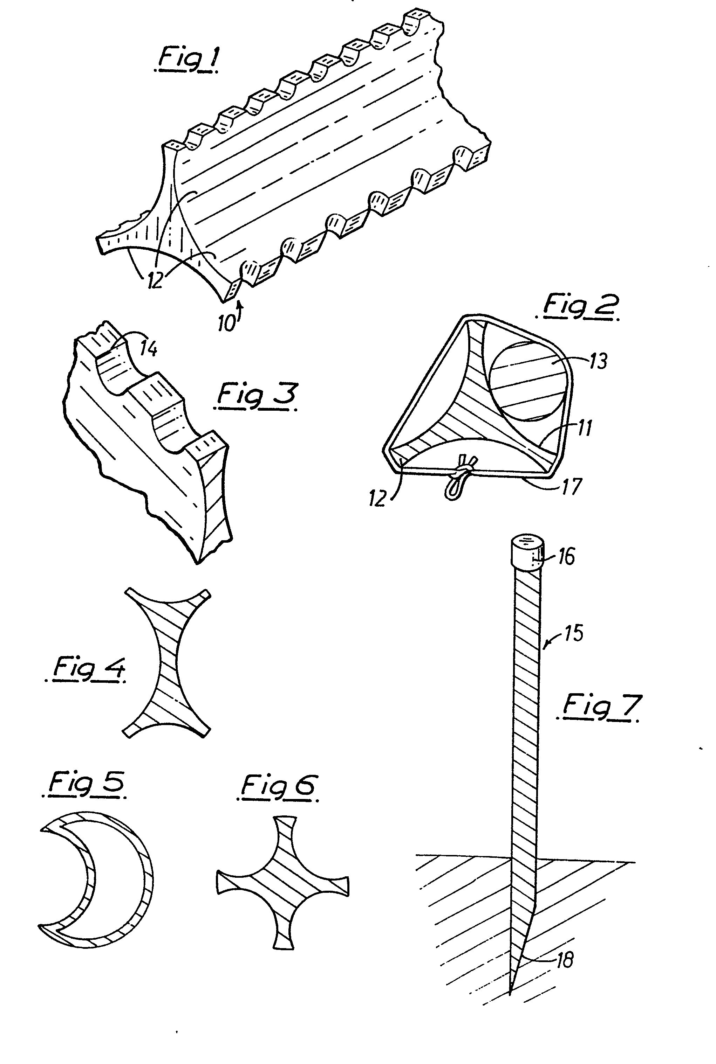

Referring to the drawings, Figure 1 shows a 3-lobed extruded plastics support stake 10 for plants which has lobes 12 having serrated edge portions 14 (Figure 3), generally applied as a coining operation, by rolling, immediately subsequent to the extrusion operation. The relative size of the serrations are somewhat exaggerated for the purposes of illustration and appreciation.

The lobes 12 thus constitute wing portions such that the stake has three longitudinally extending surfaces 11 (Figure 2) which are inwardly curved to inter-connect the lobes 12 for receiving in use a portion of a soft stemmed plant 13 in braced relation therein. The serrated edge portions 14 facilitate the retention of ties 17 thereabout in substantially non-slipping relation, i.e. the ties will not have a tendency to slide down towards the bottom of the stake and hence not serve their intended purpose.

Figure 7 illustrates a stake 15, corresponding to the stake 10 of Figure 1, having a cylindrical end cap or driving cap 16 and a pointed or tapered end 18 obtained by an oblique severance cut such that, during the manufacturing process, stakes are separated in pairs and simultaneously pointed.

The driving cap 16 extends closely over at least a plurality, and preferably all, of the lobes 12. The tapered end 18 facilitates insertion of the stake into the ground.

-5-

Figures 4 and 6 illustrate cross-sections through alternative four lobed cruciform embodiments. The Figure 5 embodiment is contemplated as a more expensive specialty stake of limited application.

Although the particular description and drawings relate to stakes extruded from synthetic plastics materials, it is envisaged that suitable metals may be used for certain specialised applications.

-6-

## CLAIMS

1. An extruded support stake for plants having a plurality of wing portions, at least one longitudinally extending surface being inwardly curved to connect said wing portions for receiving in use a portion of a plant in braced relation therein.

2. A stake as claimed in claim 1, including serrated edge portions to facilitate the retention of ties thereabout in substantially non-slipping relation.

3. A stake as claimed in claim 1 or 2, including a driving cap located over one end thereof.

4. A stake as claimed in claim 3, said driving cap extending in covering relation over a plurality of said wing portions.

5. A stake as claimed in any preceding claim, having one end thereof tapered to facilitate insertion of the stake into the ground.

6. A stake as claimed in any preceding claim, formed from a synthetic resinous plastics material.

7. A stake as claimed in claim 6, wherein the material is thermosetting.

8. A stake as claimed in any one of claims 1 to 5, formed from an extrudable metal.

9. An extruded plastics support stake for plants substantially as hereinbefore described with reference to and as shown in the accompanying drawings.

10. A method of fabricating a support stake for plants including the steps of extruding a multilobed section, and forming serrated indentations into edge portions of said lobes subsequent to extrusion.

11. A method as claimed in claim 10, including the step of applying a driving end cap in close fitting relation over said stake at one end thereof.

12. A method as claimed in claim 10 or 11, including the step of longitudinally separating a pair of said stakes by diagonal shearing action, to provide complementary pointed ends thereof.

13. A method as claimed in claim 10, 11 or 12, wherein the stake is extruded from a thermosetting synthetic plastics material and the indentations are rolled therein.

14. A method of fabricating a support stake for plants substantially as hereinbefore described with reference to the accompanying drawings.

0079758

Fig 1

12

10

Fig 2

13

11

12

17

Fig 3

14

Fig 4

Fig 5

Fig 6

Fig 7

16

15

18

European Patent
Office

**EUROPEAN SEARCH REPORT**

**0079758**
Application number

EP  82 30 5997

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-A-1 962 305   (H.A. BIEROH et al.)<br><br>* Entire document * | 1,2,5, 6,10, 12 | A 01 G    9/12<br>A 01 G   17/04 |
| X | FR-A-2 082 656   (R. BOUILLARD et al.)<br>*  Page 1, line 31 - page 2; figures 1, 2 * | 1,6,10 | |
| A | FR-A-2 048 373   (F. HEILEMANN)<br>* Figures 1a, 1b * | 3 | |
| D,A | US-A-4 176 494   (C. BOUCHER et al.) | | |
| D,A | US-A-3 875 699   (A.P. LAMARRE) | | |

----- 

**TECHNICAL FIELDS SEARCHED (Int. Cl. ³)**

A 01 G    9/12
A 01 G   17/00

The present search report has been drawn up for all claims

| Place of search<br>BERLIN | Date of completion of the search<br>20-01-1983 | Examiner<br>SCHOFER G |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82